Europäisches Patentamt

European Patent Office

Office européen des brevets

(11) Veröffentlichungsnummer: **0 395 876**
**A1**

(12) **EUROPÄISCHE PATENTANMELDUNG**

(21) Anmeldenummer: 90105790.1

(22) Anmeldetag: 27.03.90

(51) Int. Cl.⁵: **F02M 67/12, F02M 67/02, F02M 69/08**

(30) Priorität: **03.05.89 DE 3914636**

(43) Veröffentlichungstag der Anmeldung:
**07.11.90 Patentblatt 90/45**

(84) Benannte Vertragsstaaten:
**AT DE FR GB**

(71) Anmelder: **ROBERT BOSCH GMBH**
**Postfach 10 60 50**
**D-7000 Stuttgart 10(DE)**

(72) Erfinder: **Linder, Ernst, Dipl.-Ing.**
**Uhlandstrasse 24**
**D-7130 Muehlacker(DE)**

(54) **Vorrichtung zum kombinierten Ausblasen von Kraftstoff und Luft für Kraftstoffeinspritzanlagen von Brennkraftmaschinen.**

(57) Eine Vorrichtung zum kombinierten Ausblasen von Kraftstoff und Luft für Kraftstoffeinspritzanlagen von Brennkraftmaschinen weist ein Gehäuse (10) mit einem Kraftstoff- und Luftanschluß (11,12) und eine mit diesen verbundene Ausblasöffnung (20) sowie zwei im Gehäuse (10) angeordnete,von einem Elektromagneten (25) betätigte Ventile (41,42) auf. Um durch synchron getaktetes Zumessen von Kraftstoff und Luft das Mischverhältnis allein durch die Öffnungsdauer der Ventile (41,42) bestimmen zu können, sind beide Ventile (41,42) konzentrisch zueinander unmittelbar an der Ausblasöffnung (20) angeordnet. Das Ventilglied (44) des Luftventils (41) und der Ventilsitz (45) des Kraftstoffventils (42) werden gemeinsam von einem mit dem Elektromagneten (25) betätigten Hohlschaft (23) getragen. Zum Ventilöffnen hebt das Ventilglied (44) des Luftventils (41) nach innen und das Ventilglied (46) des Kraftstoffventils (42) nach außen ab und ist im Hub des Ventilglieds (46) des Kraftstoffventils (42) ein Hubanschlag (40) derart angeordnet, daß der maximale Hubweg des Hohlschaftes (23) größer ist als der des Ventilglieds (46) des Kraftstoffventils (42).

Fig. 1

# Vorrichtung zum kombinierten Ausblasen von Kraftstoff und Luft für Kraftstoffeinspritzanlagen von Brennkraftmaschinen

## Stand der Technik

Die Erfindung geht aus von einer Vorrichtung zum kombinierten Ausblasen von Kraftstoff und Luft für Kraftstoffeinspritzanlagen von Brennkraftmaschinen der im Oberbegriff des Anspruchs 1 definierten Gattung.

Solche Ausblasvorrichtungen dienen der verbesserten Gemischaufbereitung durch verbesserte Zerstäubung des Kraftstoffs bei hoher Relativgeschwindigkeit zwischen Kraftstoff und Luft. Der Kraftstoff wird vor Eintritt in den Brennraum der Brennkraftmaschine intensiv mit Luft gemischt. Das Kraftstoff-Luft-Gemisch kann sowohl in das zum Zylinder der Brennkraftmaschine führende Saugrohr als auch unmittelbar in den Zylinder selbst eingeblasen werden.

Bei einer bekannten Ausblasvorrichtung dieser Art (WO 86/00960) sind die beiden Ventile in Achsrichtung des Gehäuses hintereinander angeordnet, wobei zwischen den beiden Ventilen eine Mischkammer gebildet wird, die mit dem Kraftstoffanschluß in Verbindung steht. Das innere Ventil steuert dabei die Luftzufuhr in die Mischkammer und das als Schirmventil ausgebildete äußere Ventil den Fluß des Kraftstoff-Luft-Gemisches in den Brennraum der Brennkraftmaschine. Die Ventilglieder beider Ventile sitzen auf einer vom Elektromagneten betätigten Stange und werden von einer an der Stange angreifenden Ventilschließfeder auf die zugeordneten Ventilsitze aufgepreßt. Bei Erregung des Magneten werden beide Ventile gleichzeitig geöffnet. Dadurch beginnen Luft und Kraftstoff in einem durch die jeweiligen Drücke und Strömungsquerschnitte bestimmten Verhältnis in die Mischkammer und weiter in den Brennraum der Brennkraftmaschine zu strömen. Durch die Spaltströmung wird der Kraftstoff intensiv mit der Luft vermischt. Die Zumessung der pro Zyklus erforderlichen Kraftstoffmenge erfolgt durch Variation des Kraftstoffdrucks in Relation zum Ausblasluftdruck. Außerdem ist die zugemessene Kraftstoffmenge vom Volumen der Mischkammer abhängig.

## Vorteile der Erfindung

Die erfindungsgemäße Vorrichtung zum kombinierten Ausblasen von Kraftstoff und Luft für Kraftstoffeinspritzanlagen von Brennkraftmaschinen mit den kennzeichnenden Merkmalen des Anspruchs 1 hat den Vorteil, daß die getrennte Zumischung von Kraftstoff und Luft erst im Moment des Ausblasens erfolgt und auf eine vorgeschaltete Mischkammer verzichtet wird. Dadurch können Kraftstoff und Luft synchron getaktet zugemessen werden, so daß das Mischverhältnis allein durch die Öffnungsdauer der Ventile bestimmt wird. Der Versorgungsdruck von Kraftstoff und Luft kann konstant gehalten werden. Bei geringerem Luftdruck ist ein kleinerer Luftbedarf erforderlich, so daß auf kleinere und billigere Luftpumpen zurückgegriffen werden kann. Durch Wegfall der Mischkammer werden auch Ablagerungen im Innern der Vorrichtung vermieden, die dadurch entstehen, daß bei nicht zu vermeidenden Temperaturen von mehr als 180°C sich Kraftstoff in Luft zersetzt. Solche Ablagerungen führen langfristig zu Verunreinigungen am Zumeßspalt und zu einer Drift in der Zumessung.

Durch die in den weiteren Ansprüchen aufgeführten Maßnahmen sind vorteilhafte Weiterbildungen und Verbesserungen der im Anspruch 1 angegebenen Ausblasvorrichtung möglich.

Bei einer bevorzugten Ausführungsform der Erfindung ist der Ventilsitz des Luftventils als Ringschulter an der Innenwand eines die Ausblasöffnung enthaltenden Gehäusestutzens ausgebildet und das Ventilglied des Kraftstoffventils von einer den Hohlschaft durchziehenden, axial verschieblichen Ventilnadel getragen. Mit dem außen das Ventilglied des Luftventils und innen den Ventilsitz des Kraftstoffventils tragenden Hohlschaft umgibt damit das Luftventil koaxial das Kraftstoffventil. Dadurch wird das Kraftstoffventil thermisch besser von der Umgebung abgekoppelt.

Bei einer weiteren Ausführungsform der Erfindung sind der am Hohlschaft angeordnete Ventilsitz des Luftventils und das am Hohlschaft angeordnete Ventilglied des Kraftstoffventils als etwa rechtwinklig zueinander geneigte Ringschultern an der Außen- und Innenwand des Hohlschaftes ausgebildet und die Ringschultern an der Innenwand des Gehäusestutzens und am Schließkopf der Ventilnadel etwa unter 45° zur Gehäuseachse geneigt. Dadurch wird sichergestellt, daß Luftstrahl und Kraftstoffstrahl senkrecht zueinander aus den jeweils zugeordneten Ventilen austreten, was die Kraftstoffzerstäubung durch den Luftstrom zusätzlich verbessert.

## Zeichnung

Die Erfindung ist anhand eines in der Zeichnung dargestellten Ausführungsbeispiels in der nachfolgenden Beschreibung näher erläutert. Es zeigen:

Fig. 1 einen Längsschnitt einer Ausblasvorrichtung für eine Kraftstoffeinspritzanlage von Brennkraftmaschinen,

Fig. 2 eine vergrößerte Darstellung der Einzelheit II in Fig. 1, ausschnittweise.

### Beschreibung des Ausführungsbeispiels

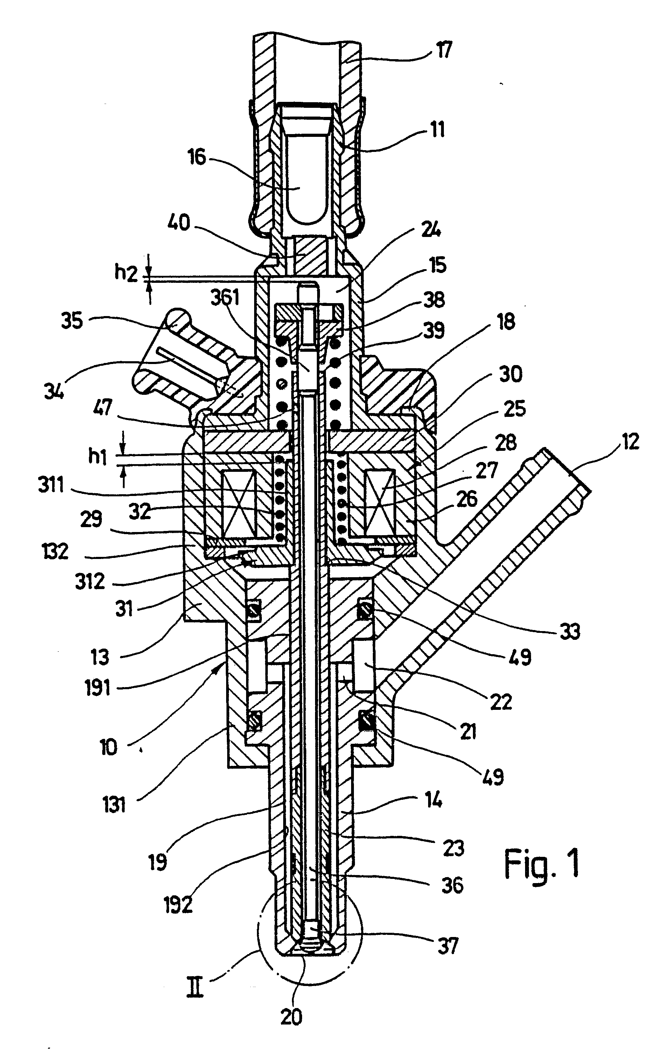

In Fig. 1 ist die Vorrichtung zum kombinierten Ausblasen von Kraftstoff und Luft für Kraftstoffeinspritzanlagen von Brennkraftmaschinen im Längsschnitt dargestellt. Sie ist sowohl zum Einblasen des Kraftstoff-Luft-Gemisches in das Saugrohr eines Zylinders der Brennkraftmaschine als auch zur Direkteinblasung unmittelbar in den Zylinder der Brennkraftmaschine geeignet. Die Vorrichtung weist ein Gehäuse 10 mit einem Kraftstoffanschluß 11 und einem Luftanschluß 12 auf. Das Gehäuse 10 ist dreiteilig ausgebildet und besitzt ein hohles, im lichten Durchmesser abgestuftes Mittelteil 13, das den Luftanschluß 12 einstückig enthält, einen Gehäusestutzen 14, der an der Stirnseite des durchmeserkleineren Mittelteilabschnittes 131 aus dem Gehäuse 10 vorsteht, und ein im Querschnitt T-förmiges Deckelteil 15, das das Mittelteil 13 an der Stirnseite des durchmessergrößeren Mittelteilabschnittes 132 abdeckt und den zur Gehäuseachse 50 koaxialen Kraftstoffanschluß 11 einstückig enthält. Das Mittelstück des Deckelteils 15 ist hohl ausgebildet und im Bereich des Kraftstoffanschlusses 11 mit einem Kraftstoffsieb 16 abgeschlossen. Auf den Kraftstoffanschluß 11 ist eine Kraftstoffzuleitung 17 aufgeschoben. Das Deckelteil 15 ist durch eine Umbördelung 18 am Mittelteil 13 gehalten.

Der Gehäusestutzen 14 ist mit einer koaxialen, abgestuften Durchgangsbohrung 19 versehen, die am freien Stirnende des Gehäusestutzens 14 die Ausblasöffnung 20 der Vorrichtung bildet. Im Bereich des durchmessergrößeren Bohrungsabschnittes 192 steht die Durchgangsbohrung 19 über Radialbohrungen 21 mit einer Umfangsnut 22 am Gehäusestutzen 14 in Verbindung, in welcher der Luftanschluß 12 mündet. Beiderseits der Umfangsnut 22 ist der Gehäusestutzen 14 durch O-Ringe 49 gegenüber der Innenwand des durchmesserkleineren Mittelteilabschnitts 131 luftdicht abgedichtet. Die Durchgangsbohrung 19 wird von einem Hohlschaft 23 durchzogen, der im Bereich des durchmesserkleineren Bohrungsabschnittes 191 axial verschieblich geführt ist und bis in den kraftstoffgefüllten Innenraum 24 des Mittelstücks des Deckelteils 15 hineinragt. Dort steht das Innere des Hohlschaftes 23 über Zulaufbohrungen 47 mit dem Innenraum 24 in Verbindung. Der Hohlschaft 23 kann mittels eines Elektromagneten 25 axial verschoben werden. Der in bekannter Weise aufgebaute Elektromagnet 25 besteht aus einem Magnettopf 26 mit hohlem Topfkern 27 und aus einer in den Ringraum zwischen Magnettopf 26 und Topfkern 27 einliegenden Magnetspule 28. Der Magnettopf 26 ist mit einer die Magnetspule 28 übergreifenden Scheibe 29 abgedeckt und zusammen mit dieser und einer am Querstück des Deckelteils 15 anliegenden Stützplatte 30 im Mittelteilabschnitt 131 des Gehäuses 10 eingespannt. Ein pilzförmiger Anker 31 sitzt mit seinem zylindrischen Teil 311 auf dem Hohlschaft 23 und übergreift mit seinem Kopfteil 312 die Scheibe 29. Eine erste Ventilschließfeder 32 stützt sich an der Stützplatte 30 und am Kopfteil 312 des Ankers 31 ab und legt letzteren gegen eine ringförmige Anschlagschulter 33 an dem Hohlschaft 23.

Die Magnetspule 28 des Elektromagneten 25 ist an den Steckkontakten 34 eines Steckers 35 angeschlossen, der als Kunststoffteil ausgebildet und am Deckelteil 15, dessen Mittelstück umschließend, befestigt ist. Bei Erregung der Magnetspule 28 führt der Anker 31 einen Hub h1 aus.

Eine Ventilnadel 36 durchzieht das Innere des Hohlschaftes 23 und trägt an ihrem der Ausblasöffnung 20 zugekehrten Stirnende einen Schließkopf 37. Die Ventilnadel 36 ist mit einem im Durchmesser vergrößerten Führungsabschnitt 361 in dem hinter der Zulaufbohrung 47 liegenden Endbereich des Hohlschaftes 23 axial verschieblich geführt. An dem dort aus dem Hohlschaft 23 vorstehenden Ende der Ventilnadel 36 ist ein Federteller 38 gehalten. Zwischen dem Federteller 38 und der gehäusefesten Stützplatte 30 stützt sich eine zweite Ventilschließfeder 39 ab, deren Kraftrichtung entgegengerichtet ist zur Kraftrichtung der ersten Ventilschließfeder 32. Das Stirnende der Ventilnadel 36 liegt mit einem Abstand h2 vor einem Anschlag 40 im Innenraum 24 des Deckelteils 15, so daß die Ventilnadel 36 maximal den Hub h2 ausführen kann.

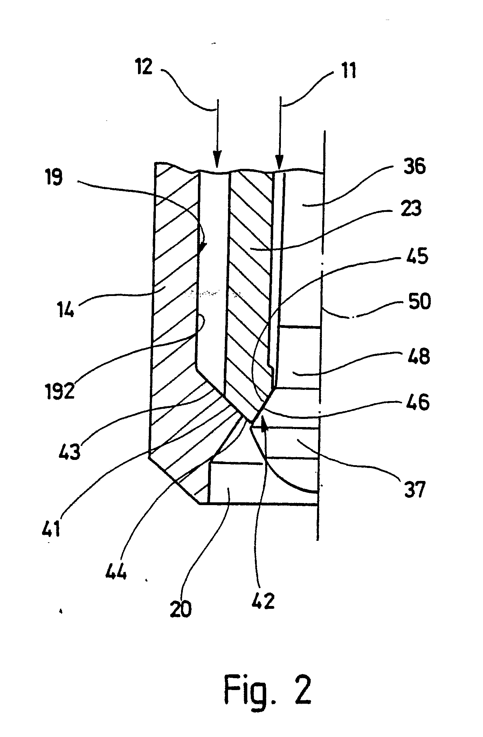

Wie aus der vergrößerten Darstellung in Fig. 2 ersichtlich ist, bilden Gehäusestutzen 14, Hohlschaft 23 und Ventilnadel 36 mit Schließkopf 37 zwei unmittelbar an der Ausblasöffnung 20 konzentrisch angeordnete Ventile, von denen das äußere Ventil, im folgenden Luftventil 41 genannt, in der Verbindung zwischen Ausblasöffnung 20 und Luftanschluß 12 und das innere Ventil, im folgenden Kraftstoffventil 42 genannt, in der Verbindung zwischen Ausblasöffnung 20 und Kraftstoffanschluß 11 angeordnet ist. Jedes Ventil 41,42 weist einen Ventilsitz und ein damit zusammenwirkendes Ventilglied auf. Dabei wird der Ventilsitz des Luftventils 41 von einer Ringschulter 43 an der Innenwand des Gehäusestutzens 14 gebildet, die unter einem Winkel von ca. 45° zur Gehäuseachse 50 verläuft. Das mit dieser Ringschulter 43 zusammenwirkende Ventilglied des Luftventils 41 wird von einer ebenfalls unter ca. 45° verlaufenden Ringschulter 44 an der Stirnseite des Hohlschaftes 23 gebildet, die etwa von der Mitte der Stirnseite zur Außenwand des Hohlschaftes 23 hin verläuft. Eine zweite, zur Ringschulter 44 etwa rechtwinklig verlaufende Ringschulter 45 an der Stirnseite des Hohlschaftes 23, die sich von etwa Stirnseitenmitte bis zur Innenwand des Hohlschaftes 23 erstreckt, bildet den Ventilsitz des Kraftstoffventils 42. Das damit zusammenwirkende Ventilglied des Kraftstoffventils 42 ist als rückwärtige Ringschulter 46 am Schließkopf 37 der Ventilnadel 36 ausgebildet und verläuft ebenfalls unter ca. 45° zur Gehäuseachse 50. Durch die erste Ventilschließfeder 32 wird die Ringschulter 44 am Hohlschaft 23 auf die Ringschulter 43 am Gehäusestutzen 14 gepreßt und damit das Luftventil 41 geschlossen gehalten. Durch die zweite Ventilschließfeder 39 wird die Ventilnadel 36 mit ihrer Ringschulter 46 gegen die Ringschulter 45 am Hohlschaft 23 gezogen und dadurch das Kraftstoffventil 42 geschlossen gehalten. Zum Ventilöffnen des Kraftstoffventils 42 hebt die Ringschulter 46 am Schließkopf 37 nach außen von der Ringschulter 45 am Hohlschaft 23 ab, und zum Ventilöffnen des Luftventils 41 muß die Ringschulter 44 am Hohlschaft 23 nach innen von der Ringschulter 43 am Gehäusestutzen 14 abheben.

Die Wirkungsweise der beschriebenen Vorrichtung ist wie folgt:

Bei unerregter Magnetspule 28 des Elektromagneten 25 ist sowohl das Luftventil 41 als auch das Kraftstoffventil 42 durch entsprechende Auslegung der Ventilschließfedern 32,39 geschlossen. In dem mit dem Kraftstoffanschluß 11 in Verbindung stehenden Innenraum 24 des Deckelteils 15 herrscht ein Kraftstoffdruck von etwa 4 bar bei Saugrohreinspritzung und von ca. 8 bar bei Direkteinspritzung in die Zylinder der Brennkraftmaschine. In dem über die Radialbohrungen 21 und die Umfangsnut 22 mit dem Luftanschluß 12 in Verbindung stehenden durchmessergrößeren Bohrungsabschnitt 192 der Durchgangsbohrung 19 im Gehäusestutzen 14 herrscht ein Luftdruck von etwa 1 - 3 bar bei Saugrohreinspritzung und von ca. 7 bar bei Direkteinspritzung. Die Ventilschließfedern 32,39 sind so bemessen, daß die Federkraft der zweiten Ventilschließfeder 39 größer ist als die Federkraft der ersten Ventilschließfeder 32, aber kleiner als die Summe aus der Federkraft der ersten Ventilschließfeder 32 und der auf den Hohlschaft 23 wirkenden Druckkraft des im Innenraum 24 des Deckelteils 15 herrschenden Kraftstoffdruckes. Wird dieser Kraftstoffdruck zu Null, so öffnet die zweite Ventilschließfeder 39 gegen die Rückstellwirkung der ersten Ventilschließfeder 32 das Luftventil 41, während das Kraftstoffventil 42 geschlossen bleibt.

Wird nunmehr die Magnetspule 28 des Elektromagneten 25 erregt, so wird der Anker 31 vom Magnettopf 26 mit Topfkern 27 angezogen und legt unter Zusammendrücken der zweiten Ventilschließfeder 39 den Hubweg h1 zurück. Durch die erste Ventilschließfeder 32, die über den Schließkopf 37 der Ventilnadel 36 eine Zugkraft auf den Hohlschaft 23 ausübt, bleibt der Hohlschaft 23 mit seiner Anlageschulter 33 immer in Anlage mit dem Anker 31 und folgt - ebenso wie die Ventilnadel 36 - der Hubbewegung des Ankers 31. Mit beginnender Hubbewegung des Ankers 31 hebt die Ringschulter 44 am Hohlschaft 23 von der Ringschulter 43 am Gehäusestutzen 14 ab, und das Luftventil 41 ist geöffnet. Nach Zurücklegen des Hubweges h2, der kleiner ist als der maximale Hubweg h1 des Ankers 31, stößt das Stirnende der Ventilnadel 36 an dem Anschlag 40 an. Damit wird die Bewegung der Ventilnadel 36 blockiert und bei weiterem Hub des Ankers 31 hebt die Ringschulter 45 am Hohlschaft 23 von der Ringschulter 46 am Schließkopf 37 der Ventilnadel 36 ab. Damit ist auch das Kraftstoffventil 42 geöffnet. Der aus dem geöffneten Kraftstoffventil 42 ausströmende Kraftstoff wird von der dazu senkrecht aus dem geöffneten Luftventil 41 ausströmenden Luft zerstäubt und mit Druck aus der Ausblasöffnung 20 ausgeblasen. Je nach Einbau der Vorrichtung in die Brennkraftmaschine gelangt das Kraftstoff-Luft-Gemisch in das Saugrohr oder unmittelbar in den Zylinder der Brennkraftmaschine.

Damit infolge von Wärmedehnungen auftretende Längenänderungen nicht in den kritischen Zumeßluftspalt des Kraftstoffventils 42 eingehen, ist letzteres als Drosselzapfendüse mit innen liegendem Drosselzapfen 48 (Fig. 2) ausgebildet. Der Hub der Ventilnadel 36 ist so groß, daß die maßgebende Drosselstelle zwischen Ventilnadel 36 und Hohlschaft 23 liegt.

**Ansprüche**

1. Vorrichtung zum kombinierten Ausblasen von Kraftstoff und Luft für Kraftstoffeinspritzanlagen von Brennkraftmaschinen, mit einem Gehäuse, das einen Kraftstoff- und einen Luftanschluß und eine mit diesen verbundene Ausblasöffnung aufweist, und mit zwei im Gehäuse angeordneten, von einem Elektromagneten betätigten Ventilen mit Ventilsitz und Ventilglied, von denen das eine in der Verbindung zwischen dem Luftanschluß und der Ausblasöffnung und das andere in der Verbindung zwischen dem Kraftstoffanschluß und der Ausblasöffnung zur dosierten Zumessung von Luft bzw. Kraftstoff liegt, dadurch gekennzeichnet, daß beide Ventile (41,42) konzentrisch zueinander unmittelbar an der Ausblasöffnung (20) angeordnet und so ausgebildet sind, daß das in Schließrichtung federbelastete Ventilglied (46) des Kraftstoffventils (42) zum Ventilöffnen nach außen und das in Schließrichtung federbelastete Ventilglied (44) des Luftventils (41) zum Ventilöffnen nach innen vom zugeordneten Ventilsitz (45,43) abhebt, daß das Ventilglied (44) des Luftventils (41) und der Ventilsitz (45) des Kraftstoffventils (42) gemeinsam von einem vom Elektromagneten (25) betätigbaren Hohlschaft (23) getragen sind und daß im Hubweg von Hohlschaft (23) und Ventilglied (46) des Kraftstoffventils (42) ein Hubanschlag (40) derart angeordnet ist, daß der maximale Hubweg des Hohlschaftes (23) größer ist als der des Ventilglieds (46) des Kraftstoffventils (42).

2. Vorrichtung nach Anspruch 1, dadurch gekennzeichnet, daß der Ventilsitz des Luftventils (41) als Ringschulter (43) an der Innenwand eines die Ausblasöffnung (20) aufweisenden hohlen Gehäusestutzens (14) ausgebildet und das Ventilglied (46) des Kraftstoffventils (42) von einer den Hohlschaft (23) durchziehenden, axial verschieblich gehaltenen Ventilnadel (36) getragen ist.

3. Vorrichtung nach Anspruch 2, dadurch gekennzeichnet, daß die Ventilnadel (36) stirnseitig einen Schließkopf (37) mit gegenüber dem Nadeldurchmesser größeren Durchmesser trägt und daß das Ventilglied als rückwärtige Ringschulter (46) am Schließkopf (37) ausgebildet ist.

4. Vorrichtung nach Anspruch 2 und 3, dadurch gekennzeichnet, daß der am Hohlschaft (23) angeordnete Ventilsitz und das am Hohlschaft (23) angeordnete Ventilglied als etwa rechtwinklig zueinander geneigte Ringschultern (44,45) an der Außen- und Innenwand des Hohlschaftes (23) ausgebildet sind und daß die Ringschultern (43,46) an der Innenwand des Gehäusesstutzens (14) bzw. am Schließkopf (37) etwa unter 45° zur Gehäuseachse (50) geneigt sind.

5. Vorrichtung nach einem der Ansprüche 1 - 4, dadurch gekennzeichnet, daß der Elektromagnet (25) einen Magnettopf (26) mit Topfkern (27) und Magnetspule (28) und einen beweglichen Anker (31) aufweist, daß eine Ventilschließfeder (32) für das Luftventil (41) sich am Gehäuse (10) und am Anker (31) abstützt und diesen gegen eine Anschlagschulter (33) am Hohlschaft (23) anlegt und daß eine Ventilschließfeder (39) für das Kraftstoffventil (42) mit einer der Kraftrichtung der Ventilschließfeder (32) für das Luftventil (41) entgegengesetzten Kraftrichtung sich am Gehäuse (10) und an der Ventilnadel (36) abstützt.

6. Vorrichtung nach Anspruch 5, dadurch gekennzeichnet, daß der Hohlschaft (23) in einem dem Kraftstoffanschluß (11) nachgeordneten, kraftstoffgefüllten Raum (24) hineinragt und dort mindestens eine im Schaftinnern mündende Zulaufbohrung (47) trägt und daß die Federkräfte der Ventilschließfedern (32,39) so eingestellt sind, daß die Federkraft der Ventilschließfeder (39) für das Kraftstoffventil (42) größer ist als die Federkraft der Ventilschließfeder (32) für das Luftventil (41) aber kleiner als die Summe aus der Federkraft der Ventilschließfeder (32) für das Luftventil (41) und der auf den Hohlschaft (23) wirkenden Druckkraft des im kraftstoffgefüllten Raum (24) herrschenden Kraftstoffdrucks.

7. Vorrichtung nach Anspruch 6, dadurch gekennzeichnet, daß die Ventilnadel (36) in dem Endabschnitt des Hohlschaftes (23), der von der Ausblasöffnung (20) gesehen hinter der die Hohlschaftwand durchdringenden Zulaufbohrung (47) liegt, auf einem im Durchmesser größeren Führungsabschnitt (361) axial verschieblich geführt ist und aus diesem axial hervorsteht und daß auf dem vorstehenden Endabschnitt der Ventilnadel (36) ein Federteller (38) zum Abstützen der Ventilschließfeder (39) für das Kraftstoffventil (42) gehalten ist.

8. Vorrichtung nach einem der Ansprüche 2 - 7, dadurch gekennzeichnet, daß der Gehäusestutzen (14) in das Gehäuse (10) luftdicht eingesetzt ist und sein Innenraum (192) über mindestens eine Radialbohrung (21) mit dem Luftanschluß (12) verbunden ist.

9. Vorrichtung nach einem der Ansprüche 6 - 8, dadurch gekennzeichnet, daß der Kraftstoffdruck in dem mit dem Kraftstoffanschluß (11) verbundenen kraftstoffgefüllten Raum (24) bei Betrieb der Brennkraftmaschine konstant, vorzugsweise auf etwa 4 bar bei Saugrohreinspritzung und ca. 8 bar bei Direkteinspritzung in die Zylinder der Brennkraftmaschine, gehalten ist und daß der am Luftanschluß (12) anstehende Luftdruck in etwa konstant und kleiner als der Kraftstoffdruck ist und vorzugsweise etwa 1 - 3 bar bei Saugrohreinspritzung und ca. 7 bar bei Direkteinspritzung in die Zylinder der Brennkraftmaschine beträgt.

10. Vorrichtung nach einem der Ansprüche 1 - 9, dadurch gekennzeichnet, daß das Kraftstoffventil (42) als Drosselzapfendüse mit innen liegendem Drosselzapfen (48) ausgebildet ist.

EP 0 395 876 A1

Fig. 1

EP 0 395 876 A1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-1 333 541 (COWARDIN)<br>* Seite 1, Zeile 89 - Seite 2, Zeile 3; Seite 2, Zeile 116 - Seite 3, Zeile 45; Seite 3, Zeilen 73-104; Figuren 1,2,3 * | 1-5 | F 02 M 67/12<br>F 02 M 67/02<br>F 02 M 69/08 |
| A | | 6,8 | |
| | --- | | |
| D,Y | WO-A-8 600 960 (ORBITAL ENGINE)<br>* Seite 6, Zeilen 21-36 * | 1-5 | |
| | --- | | |
| A | DE-C- 848 876 (DAIMLER-BENZ)<br>* Seite 2, Zeilen 8-13; Figur 1 * | 7 | |
| | ----- | | |

| RECHERCHIERTE SACHGEBIETE (Int. Cl.5) |
|---|
| F 02 M<br>F 02 D |

Der vorliegende Recherchenbericht wurde für alle Patentansprüche erstellt

| Recherchenort | Abschlußdatum der Recherche | Prüfer |
|---|---|---|
| BERLIN | 11-06-1990 | NOVELLI B. |